# EUROPÄISCHE PATENTSCHRIFT

(11) **EP 0 736 575 B1**
(45) Veröffentlichungstag und Bekanntmachung des Hinweises auf die Patenterteilung: **24.10.2001**
(21) Anmeldenummer: 96104862.6
(22) Anmeldetag: 27.03.1996
(51) Int. Cl.: C09B 55/00, C09B 23/16, B41M 5/38, C09B 53/02

(54) **Azamethinfarbstoffe mit heterocyclischen Seitengruppen**
Azamethine dyes with heterocyclic side groups
Colorants azaméthiniques avec des groupes latéraux hétérocycliques

(30) Priorität: 03.04.1995 DE 19512398
(43) Veröffentlichungstag der Anmeldung: 09.10.1996
(73) Patentinhaber: BASF AKTIENGESELLSCHAFT, 67056 Ludwigshafen (DE)
(72) Erfinder: Schmidt, Andreas Johann, Dr., 67251 Freinsheim (DE); Sens, Rüdiger, Dr., 68165 Mannheim (DE)

(56) Entgegenhaltungen:
- EP-A- 0 443 045
- EP-A- 0 480 252
- EP-A- 0 480 281
- EP-A- 0 701 907
- US-A- 5 128 312
- US-A- 5 216 169

## Beschreibung

Die vorliegende Erfindung betrifft neue Methinfarbstoffe der Formel I 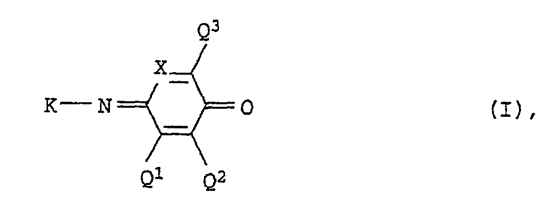 in der K einen Rest der Formel 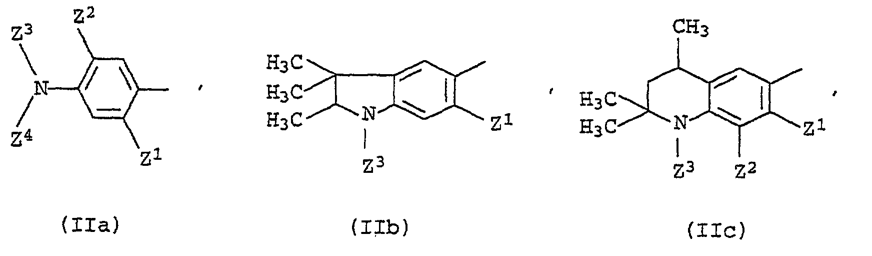 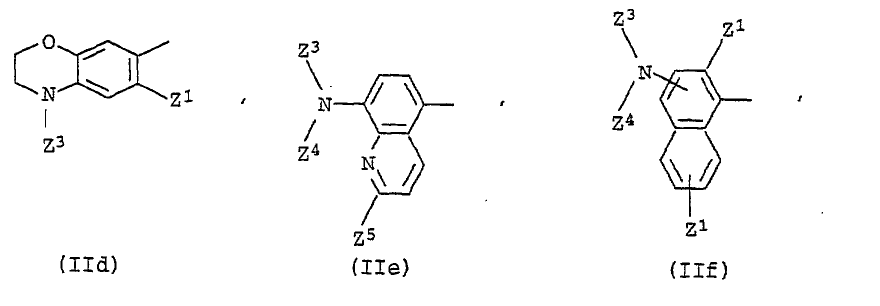 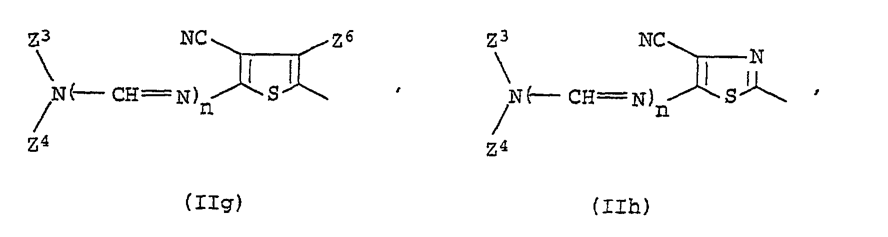 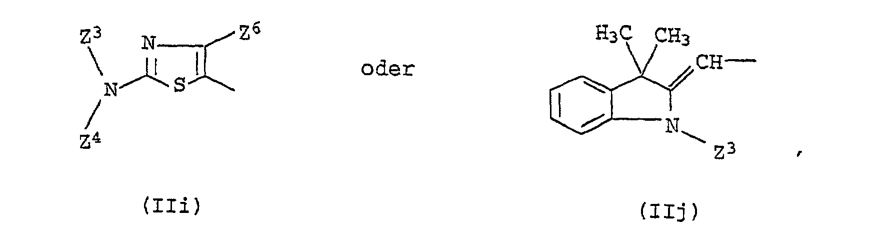 worin
- n: für 0 oder 1,
- Z¹: für Wasserstoff, C₁-C₆-Alkyl, das gegebenenfalls durch 1 oder 2 Sauerstoffatome in Etherfunktion unterbrochen ist, Hydroxy, C₁-C₆-Alkoxy, C₁-C₆-Alkylsulfonylamino, C₁-C₆-Mono- oder Dialkylaminosulfonylamino oder den Rest -NHCOZ⁷ oder -NHCO₂Z⁷, wobei Z⁷ die Bedeutung von Phenyl, Benzyl, Tolyl, Thienyl oder C₁-C₆-Alkyl, das gegebenenfalls durch ein Sauerstoffatom in Etherfunktion unterbrochen ist, besitzt,
- Z²: für Wasserstoff, Halogen, C₁-C₆-Alkyl oder C₁-C₆-Alkoxy,
- Z³ und Z⁴: unabhängig voneinander jeweils für Wasserstoff, C₁-C₁₃-Alkyl, das gegebenenfalls substituiert ist und durch 1 bis 3 Sauerstoffatome in Etherfunktion unterbrochen sein kann, C₃-C₄-Alkenyl, C₃-C₈-Cycloalkyl, Phenyl oder Tolyl oder zusammen mit dem sie verbindenden Stickstoffatom für einen 5- oder 6-gliedrigen gesättigten heterocyclischen Rest, der gegebenenfalls weitere Heteroatome enthält,
- Z⁵: für Wasserstoff oder C₁-C₆-Alkyl und
- Z⁶: für Wasserstoff, Halogen, C₁-C₆-Alkyl, gegebenenfalls substituiertes Phenyl, gegebenenfalls substituiertes Benzyl, C₃-C₈-Cycloalkyl, Thienyl, Hydroxy, C₁-C₆-Alkoxy, C₁-C₆-Alkylthio oder C₁-C₆-Monoalkylamino stehen,
- X: Stickstoff oder einen Rest der Formel C―Q¹ und
- Q¹, Q² und Q³: unabhängig voneinander jeweils Wasserstoff, C₁-C₆-Alkyl, das gegebenenfalls durch 1 oder 2 Sauerstoffatome in Etherfunktion unterbrochen ist, Benzyl, C₃-C₈-Cycloalkyl, gegebenenfalls substituiertes Phenyl, C₁-C₄-Fluoralkyl, C₁-C₆-Alkoxy, Benzyloxy, gegebenenfalls substituiertes Phenoxy, C₁-C₆-Alkylthio, Halogen, Cyano, Formylamino oder einen Rest der Formel R³, -CO-OR¹, -CO-NHR¹, -CO-NH-CO-R¹, -CO-NH-CO-R⁴, -CO-NH-SO₂R⁴, -NH-CO-R¹, -NH-CO-OR¹, -NH-CO-NR¹R², -NH-CS-OR¹, -NH-CS-NR¹R², -NH-CO-R⁴, -NH-SO₂-R¹, -NH-SO₂-R⁴ oder -NH-SO₂-NR¹R², worin R¹ und R² unabhängig voneinander jeweils für C₁-C₁₃-Alkyl, das gegebenenfalls substituiert ist und durch 1 bis 3 Sauerstoffatome in Etherfunktion unterbrochen sein kann, C₃-C₈-Cycloalkyl, gegebenenfalls substituiertes Phenyl oder -NR¹R² auch für Amino, R³ für einen Rest der Formel 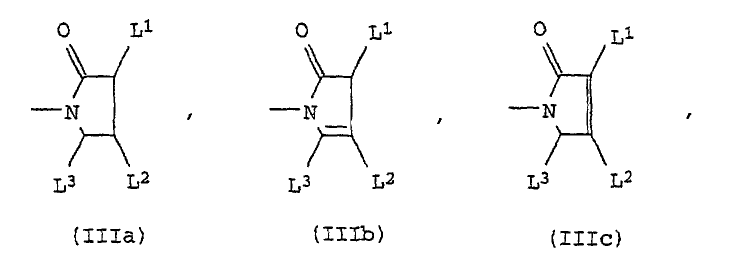 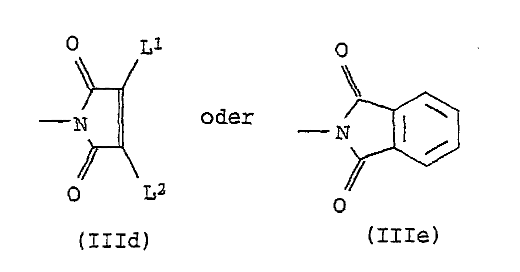
worin L¹, L² und L³ unabhängig voneinander jeweils die Bedeutung von Wasserstoff oder C₁-C₄-Alkyl besitzen und R⁴ für einen 5- oder 6-gliedrigen heterocyclischen Rest, der gegebenenfalls benzoanelliert ist und ein oder mehrere Heteroatome, ausgewählt aus der Gruppe, bestehend aus Stickstoff, Sauerstoff und Schwefel, aufweist, stehen, oder Q¹ und Q² zusammen mit den Kohlenstoffatomen, an die sie geknüpft sind, einen 5- oder 6-gliedrigen carbocyclischen oder heterocyclischen Ring bedeuten,
mit der Maßgabe, daß mindestens einer der Reste Q¹, Q² oder Q³ die Bedeutung des Restes R³ besitzt,
sowie ein Verfahren zu ihrer thermischen Übertragung.

Aus der US-A-5 225 548 ist die thermische Übertragung von Indophenolfarbstoffen bekannt. Es hat sich jedoch gezeigt, daß die dort zur Anwendung kommenden Farbstoffe noch anwendungstechnische Mängel aufweisen.

Die US-A-5 216 169 beschreibt 3-Hydroxypyridinazomethinfarbstoffe.

Aufgabe der vorliegenden Erfindung war es, neue Azamethinfarbstoffe bereitzustellen, die sich vorteilhaft für Non-impact-printing-Verfahren, beispielsweise für den thermischen Transfer, eignen und dabei insbesondere hohe thermische Stabilität, hohe Lichtechtheit, hohe Farbstärke und hohe Brillanz aufweisen. Die neuen Farbstoffe sollten auch vorteilhaft zum Färben oder Bedrucken von textilen Materialien geeignet sein.

Demgemäß wurden die eingangs näher bezeichneten Methinfarbstoffe der Formel I gefunden.

Alle in den obengenannten Formeln auftretenden Alkyl- oder Alkenylgruppen können sowohl geradkettig als auch verzweigt sein.

Wenn in den obengenannten Formeln substituierte Alkylreste auftreten, so können als Substituenten, sofern nicht anders vermerkt, z.B. Cyclohexyl, gegebenenfalls substituiertes Phenyl, C₁-C₈-Alkanoyloxy, C₁-C₈-Alkylaminocarbonyloxy, C₁-C₈-Alkoxycarbonyl, C₁-C₈-Alkoxycarbonyloxy, wobei die Alkylkette der drei letztgenannten Reste gegebenenfalls durch 1 bis 3 Sauerstoffatome in Etherfunktion unterbrochen ist und durch Phenyl oder Phenoxy substituiert sein kann, Cyclohexyloxy, Phenoxy, Halogen, Hydroxy, Carboxyl oder Cyano in Betracht kommen. Die Alkylreste weisen dabei in der Regel 1 oder 2 Substituenten auf.

Wenn in den obengenannten Formeln Alkylreste auftreten, die durch mehrere Sauerstoffatome in Etherfunktion unterbrochen sind, so sind, solche Alkylreste bevorzugt, die durch 1 oder 2 Sauerstoffatome in Etherfunktion unterbrochen sind.

Wenn in den obengenannten Formeln substituierte Phenylreste auftreten, so können als Substituenten, z.B. C₁-C₈-Alkyl, C₁-C₈-Alkoxy, Halogen, dabei insbesondere Chlor oder Brom, Nitro oder Carboxyl in Betracht kommen. Die Phenylreste weisen dabei in der Regel 1 bis 3 Substituenten auf.

Reste Q¹, Q², Q³, R¹, R², Z¹, Z², Z³, Z⁴, Z⁵, Z⁶ und Z⁷ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl oder 2-Methylpentyl.

Reste R¹, R², Z³ und Z⁴ sind weiterhin z.B. Heptyl, Octyl, 2-Ethylhexyl, Isooctyl, Nonyl, Isononyl, Decyl, Isodecyl, Undecyl, Dodecyl, Tridecyl oder Isotridecyl. [Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. A1, Seiten 290 bis 293, sowie Vol. A 10, Seiten 284 und 285).]

Reste Q¹, Q², Q³, R¹, R², Z¹, Z³, Z⁴ und Z⁷ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 4-Methoxybutyl, 2- oder 4-Ethoxybutyl, 3,6-Dioxaheptyl, 3,6-Dioxaoctyl, 3,7-Dioxaoctyl oder 4,7-Dioxaoctyl.

Reste R¹, R², Z³ und Z⁴ sind weiterhin z.B. 2- oder 3-Butoxypropyl, 2- oder 4-Butoxybutyl, 4,8-Dioxanonyl, 3,7-Dioxanonyl, 4,7-Dioxanonyl, 4,8-Dioxadecyl, 3,6,9-Trioxadecyl oder 3,6,9-Trioxaundecyl.

Reste Q¹, Q², Q³, Z¹, Z² und Z⁶ sind weiterhin z.B. Methoxy, Ethoxy, Propoxy, Isopropoxy, Butoxy, Isobutoxy, sec-Butoxy, Pentyl, Isopentyloxy, Neopentyloxy oder Hexyloxy.

Reste Q¹, Q², Q³, R¹, R² und Z⁶ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2,6-Dichlorphenyl, 2-, 3- oder 4-Nitrophenyl oder 2-, 3- oder 4-Carboxylphenyl. Reste Q¹, Q², Q³, Z³, Z⁴ und Z⁶ sind weiterhin z.B. Cyclopropyl, Cyclobutyl, Cyclopentyl, Cyclohexyl, Cycloheptyl oder Cyclooctyl.

Reste R¹, R², Z³ und Z⁴ sind weiterhin z.B. Cyclohexylmethyl, 1- oder 2-Cyclohexylethyl, Carboxylmethyl, 2-Carboxylethyl, 2- oder 3-Carboxylpropyl, Trifluormethyl, 2-Chlorethyl, 2-Cyclohexyloxyethyl, Phenoxymethyl, 2-Phenoxyethyl, 2- oder 3-Phenoxypropyl, Benzyl, 2-Methylbenzyl, 1- oder 2-Phenylethyl, 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl, 2- oder 3-(2-Ethoxyethoxycarbonyloxy)propyl, 2-Methylaminocarbonyloxyethyl oder 2-Ethylaminocarbonyloxyethyl.

Reste Q¹, Q², Q³, Z² und Z⁶ sind weiterhin z.B. Fluor, Chlor oder Brom.

Reste Q¹, Q², Q³ und Z⁶ sind weiterhin z.B. Fluormethyl, Difluormethyl, Trifluormethyl, 1,1,1-Trifluorethyl, Pentylfluorethyl, Bis(trifluormethyl)methyl, Heptafluorpropyl, Nonafluorbutyl, Methylthio, Ethylthio, Propylthio, Isopropylthio, Butylthio, Isobutyltho, sec-Butylthio, Pentylthio, Isopentylthio, Neopentylthio, tert-Pentylthio oder Hexylthio.

Reste Q¹, Q² und Q³ sind weiterhin z.B. Phenoxy, 2-, 3- oder 4-Methylphenoxy, 2-, 3- oder 4-Methoxyphenoxy oder 2-, 3- oder 4-Chlorphenoxy.

Reste Z¹ sind z.B. Methylsulfonylamino, Ethylsulfonylamino, Propylsulfonylamino, Isopropylsulfonylamino, Butylsulfonylamino, Pentylsulfonylamino, Hexylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino, Mono- oder Dipentylaminosulfonylamino, Mono- oder Dihexylaminosulfonylamino oder (N-Methyl-N-ethylaminosulfonyl)amino.

Reste Z⁶ sind weiterhin, z.B. Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino oder Hexylamino.

Reste Z³ und Z⁴ sind weiterhin z.B. Allyl oder Methallyl.

Wenn Z³ und Z⁴ zusammen mit dem sie verbindenden Stickstoffatom einen 5- oder 6-gliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Wenn Q¹ und Q² zusammen mit den Kohlenstoffatomen, an die sie geknüpft sind, einen 5- oder 6-gliedrigen carbocyclischen oder heterocyclischen Ring bedeuten, so kann dafür z.B. der Pyrrol-, Benzol- oder Pyridinring in Betracht kommen. Diese Ringe können auch substituiert und/oder gesättigt sein.

Reste R³ leiten sich von einem 5- oder 6-gliedrigen nicht-aromatischen heterocyclischen Rest ab, der gegebenenfalls benzoanelliert ist und der ein oder mehrere Heteroatome, ausgewählt aus der Gruppe, bestehend aus Stickstoff, Sauerstoff und Schwefel, aufweist.

Geeignete heterocyclische Grundkörper, die Substituenten tragen können, von denen sich die Reste R³ ableiten, sind z.B. Pyrrolidin, Pyrrolin, Tetrahydrofuran, Tetrahydrothiophen, Pyrazolidin, Pyrazolin, Imidazolidin, Imidazolin, Indolin, Isoindolin, Piperidin, Morpholin, Thiomorpholin, Piperazin, Tetrahydrochinolin oder Tetrahydroisochinolin.

Hervorzuheben sind 5-gliedrige nicht-aromatische heterocyclische Reste, die gegebenenfalls benzoanelliert sind, 1 oder 2 Stickstoffatome aufweisen und über ein Stickstoffatom gebunden sind, insbesondere solche der Pyrrolidin-, Pyrrolin- oder Isoindolinreihe.

Als Reste R³ kommen insbesondere solche der Formel 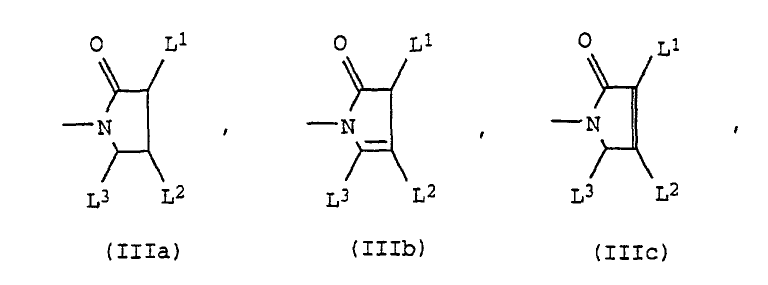 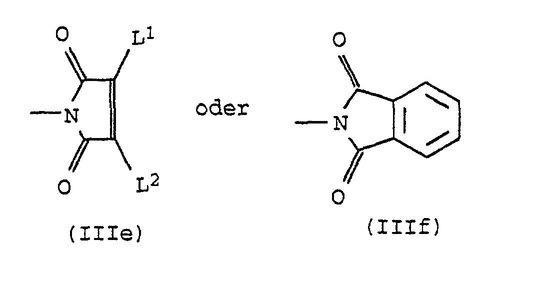 in Betracht, worin
L¹, L² und L³ unabhängig voneinander jeweils Wasserstoff oder C₁-C₄-Alkyl bedeuten.

Von besonderer Bedeutung sind Reste der Formel IIIa, IIIe oder IIIf, worin L¹, L² und L³ jeweils Wasserstoff bedeuten.

Der Rest der Formel IIIa, in der L¹, L² und L³ jeweils Wasserstoff bedeutet, ist von besonderem technischen Interesse.

Reste R⁴ können z.B. solche sein, wie unter R³ beschrieben.

Vorzugsweise leiten sich Reste R⁴ von einem 5- oder 6-gliedrigen aromatischen heterocyclischen Rest ab, der gegebenenfalls benzoanelliert ist und der ein oder mehrere Heteroatome, ausgewählt aus der Gruppe, bestehend aus Stickstoff, Sauerstoff und Schwefel, aufweist.

Geeignete heterocyclische Grundkörper, die Substituenten tragen können, von denen sich die Reste R⁴ ableiten, sind z.B. Pyrrol, Furan, Thiophen, Pyrazol, Imidazol, Oxazol, Thiazol, Isothiazol, 1,2,4-Triazol, 1,2,4-Oxadiazol, 1,3,4-Oxadiazol, 1,2,4-Thiadiazol, 1,3,4-Thiadiazol, Pyridin, Pyridazin, Pyrimidin oder Pyrazin.

Hervorzuheben sind dabei Heterocyclen aus der Pyrrol-, Thiophen-, Isoxazol-, Pyridin- oder Pyridazinreihe.

Als Reste R⁴-CO oder R⁴-SO₂ kommen insbesondere solche 5- oder 6-gliedrigen aromatischen heterocyclischen Reste in Betracht, die sich von den folgenden heterocyclischen Carbonsäuren R⁴-COOH oder Sulfonsäuren R⁴-SO₃H ableiten: 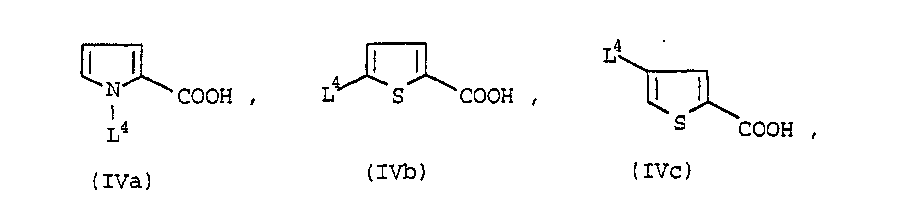 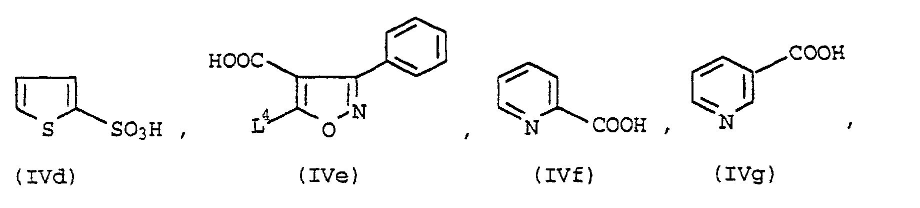 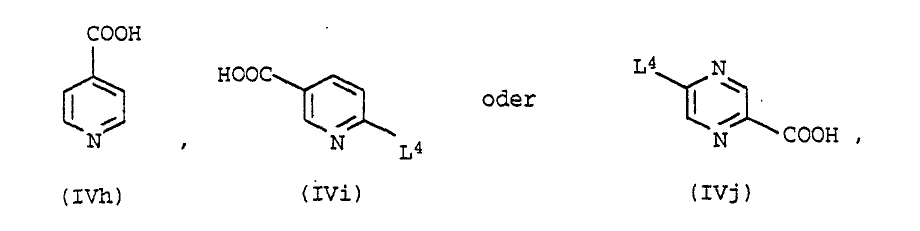 wobei L⁴ jeweils für C₁-C₄-Alkyl steht.

Bevorzugt sind Methinfarbstoffe der Formel I, in der Q¹, Q² und Q³ unabhängig voneinander jeweils Wasserstoff, Halogen, C₁-C₄-Alkyl, C₁-C₄-Alkoxy, Formylamino oder einen Rest der Formel R³,-NH-CO-R¹ oder -NH-CO-OR¹ bedeuten, worin R¹ und R³ jeweils die obengenannte Bedeutung besitzen.

Weiterhin bevorzugt sind Methinfarbstoffe der Formel I, in der K einen Rest der Formel IIa, IIc oder IIi bedeutet, wobei der Rest der Formel IIa besonders zu nennen ist.

Weiterhin bevorzugt sind Methinfarbstoffe der Formel I, in der einer der Reste Q² oder Q³ den Rest R³ bedeutet und Q¹ verschieden verschieden vom Rest R³ ist.

Besonders bevorzugt sind Methinfarbstoffe der Formel I, in der Q¹ Wasserstoff, C₁-C₄-Alkyl, Halogen oder einen Rest der Formel -NH-CO-R¹, worin R¹ für C₁-C₆-Alkyl, das gegebenenfalls durch Phenyl, Halogen oder Hydroxy substituiert ist, oder Cyclohexyl steht, und Q² und Q³ unabhängig voneinander jeweils Wasserstoff C₁-C₄-Alkyl, Formylamino oder einen Rest der Formel R³ oder -NH-CO-R¹, worin R¹ für C₁-C₆-Alkyl oder Tolyl steht und R³ die obengenannte Bedeutung besitzt, bedeuten.

Ganz besonders bevorzugt sind Methinfarbstoffe der Formel Ia 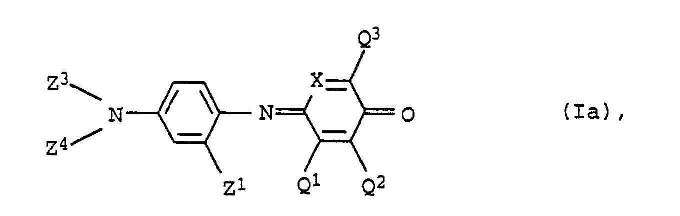 in der
- X: Stickstoff oder einen Rest der Formel C―Q¹, wobei Stickstoff besonders hervorzuheben ist,
- Z¹: Wasserstoff, C₁-C₄-Alkyl oder C₂-C₅-Alkanoylamino,
- Z³ und Z⁴: unabhängig voneinander jeweils C₁-C₆-Alkyl, das gegebenenfalls durch Hydroxy substituiert ist, Benzyl, Cyclohexyl, Phenyl oder Tolyl,
- Q¹: Wasserstoff, C₁-C₄-Alkyl, C₁-C₄-Alkoxy oder einen Rest der Formel -NH-CO-R¹ und
- Q² und Q³: unabhängig voneinander jeweils Wasserstoff, C₁-C₄-Alkyl, C₁-C₄-Alkoxy, Formylamino oder einen Rest der Formel R³, -NH-CO-R¹ oder -NH-CO-OR¹ bedeuten, wobei R¹ jeweils für C₁-C₆-Alkyl, das gegebenenfalls durch Hydroxy substituiert ist, Benzyl, Cyclohexyl, Phenyl oder Tolyl steht und R³ die obengenannte Bedeutung besitzt
mit der Maßgabe, daß mindestens einer der Reste Q² oder Q³ die Bedeutung des Rests R³ besitzt.

Von besonderem Interesse sind Methinfarbstoffe der Formel Ia, in der
- Z¹: Wasserstoff, Methyl, Ethyl oder C₂-C₅-Alkanoylamino,
- Z³ und Z⁴: unabhängig voneinander jeweils C₁-C₆-Alkyl oder Benzyl,
- Q¹: Wasserstoff, C₁-C₄-Alkyl oder C₂-C₅-Alkanoylamino und
- Q² und Q³: unabhängig voneinander jeweils Wasserstoff, C₁-C₄-Alkyl, C₁-C₅-Alkanoylamino, Benzoylamino, Methylbenzoylamino oder einen Rest der Formel R³ bedeuten.

Von besonderem Interesse sind weiterhin Methinfarbstoffe der Formel I, in der Q³ einen 5- oder 6-gliedrigen nicht-aromatischen heterocyclischen Rest, der gegebenenfalls benzoanelliert ist und ein oder mehrere Heteroatome, ausgewählt aus der Gruppe, bestehend aus Stickstoff, Sauerstoff und Schwefel, aufweist, bedeutet.

Daneben werden Methinfarbstoffe der Formel I bevorzugt, in denen die Substituenten aus einer Kombination der oben aufgeführten bevorzugten Substituenten ausgewählt sind.

Die Methinfarbstoffe der Formel I können z.B. nach den in der US-5 225 548 oder US-A-5 310 942 genannten Methoden erhalten werden.

Beispielsweise kann man eine Nitrosoverbindung der Formel V

K ― N = O (V),

in der K die obengenannte Bedeutung besitzt, mit einem Hydroxyaromaten der Formel VI 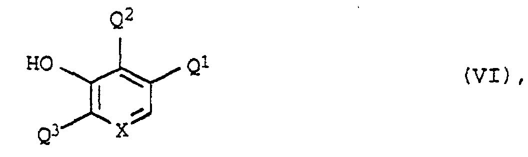 in der Q¹, Q², Q³ und X jeweils die obengenannte Bedeutung besitzen, kondensieren.

Es ist auch möglich, Amine der Formel VII

K ― NH₂ (VII),

in der K jeweils die obengenannte Bedeutung besitzt, mit den Hydroxyaromaten der Formel VI oxidativ zu kuppeln.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich ein oder mehrere Methinfarbstoffe der Formel I befinden.

Zur Herstellung der für das erfindungsgemäße Verfahren benötigten Farbstoffträger werden die Methinfarbstoffe der Formel I in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffe vorzugsweise in molekular-dispers gelöster Form. Die Druckfarbe kann mittels einer Rakel auf den inerten Träger aufgetragen und die Färbung an der Luft getrocknet werden. Geeignete organische Lösungsmittel für die Farbstoffe sind z.B. solche, in denen die Löslichkeit der Farbstoffe bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffe an den inerten Träger abriebfest zu binden vermögen. Dabei werden solche Bindemittel bevorzugt, die die Farbstoffe nach Trocknung der Druckfarbe an der Luft in Form eines klaren, transparenten Films aufnehmen, ohne daß dabei eine sichtbare Auskristallisation der Farbstoffe auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel: Farbstoff beträgt im allgemeinen 1:1 bis 10:1.

Als Hilfsmittel kommen z.B. Trennmittel in Betracht, wie sie in der US-A-5 132 438 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die im erfindungsgemäßen Verfahren der Anwendung gelangenden Methinfarbstoffe der Formel I zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie. Außerdem zeichnen sie sich durch hohe Brillanz aufgrund der hohen Transparenz im blauen und grünen Spektralbereich aus.

Die erfindungsgemäßen Farbstoffe der Formel I eignen sich weiterhin vorteilhaft zum Färben von synthetischen Materialien, z.B. von Polyestern, Polyamiden oder Polycarbonaten. Insbesondere zu nennen sind Materialien in textiler Form, wie Fasern, Garne, Zwirne, Maschenware, Webware oder Non-wovens aus Polyester oder Polyamid, oder auch Polyester-Baumwolle-Mischgewebe. Die neuen Farbstoffe der Formel I sind auch geeignet zum Färben von Keratinfasern, z.B. Pelzen oder Haaren.

Die neuen Farbstoffe der Formel I eignen sich weiterhin vorteilhaft für die Herstellung von Farbfiltern, wie sie z.B. in der EP-A-399 473 beschrieben sind, oder können auch im Ink-Jet-Verfahren zur Anwendung gelangen.

Schließlich können sie auch vorteilhaft als Farbmittel für die Herstellung von Tonern für die Elektrophotographie verwendet werden.

Die folgenden Beispiele sollen die Erfindung näher erläutern.

### A) Herstellung

### Beispiel 1

a) 220 g (2 mol) 2-Amino-3-hydroxypyridin wurden in 2,5 l Toluol suspendiert und mit einer Lösung von 282 g (2 mol) 4-Chlorbutyrylchlorid in 400 ml Toluol versetzt. Es wurde 5 h unter Rückfluß erhitzt. Der beim Abkühlen ausgefallene Rückstand wurde abgesaugt und aus Chloroform/Methanol umkristallisiert. Man erhielt 200 g farbloser Kristalle der Formel 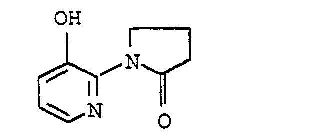 Fp.: 144°C
b) 21,4 g (0,1 mol) 2-Methyl-4-diethylaminoanilin-hydrochlorid wurden mit 400 ml 10 gew.-%-iger Natriumcarbonatlösung versetzt, dann wurden 17,8 g der unter a) beschriebenen Verbindung zugegeben. Bei 0 bis 10°C wurde anschließend eine Lösung von 45,6 g (0.2 mol) Ammoniumperoxodisulfat in 200 ml Wasser zugetropft. Die Reaktionsmischung wurde 1 h bei Raumtemperatur weitergerührt, der ausgefallene Farbstoff abgesaugt und aus Essigester umkristallisiert. Man erhielt 6 g dunkelblauer Kristalle der Formel 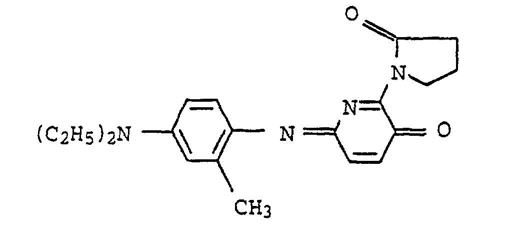
Fp: 151°C; λmax (in CH₂Cl₂) : 647 nm

In ähnlicher Weise wurden die Farbstoffe der folgenden Tabellen 1 erhalten. Die Tabelle enthält u.a. neben dem Absorptionsmaximum (gemessen in Methylenchlorid = a; Tetrahydrofuran = b) auch den R_{f}-Wert auf Silicagel und das bei der Chromatographie verwendete Laufmittel (Toluol/Essigester 3:2 v/v = c; Essigester = d)

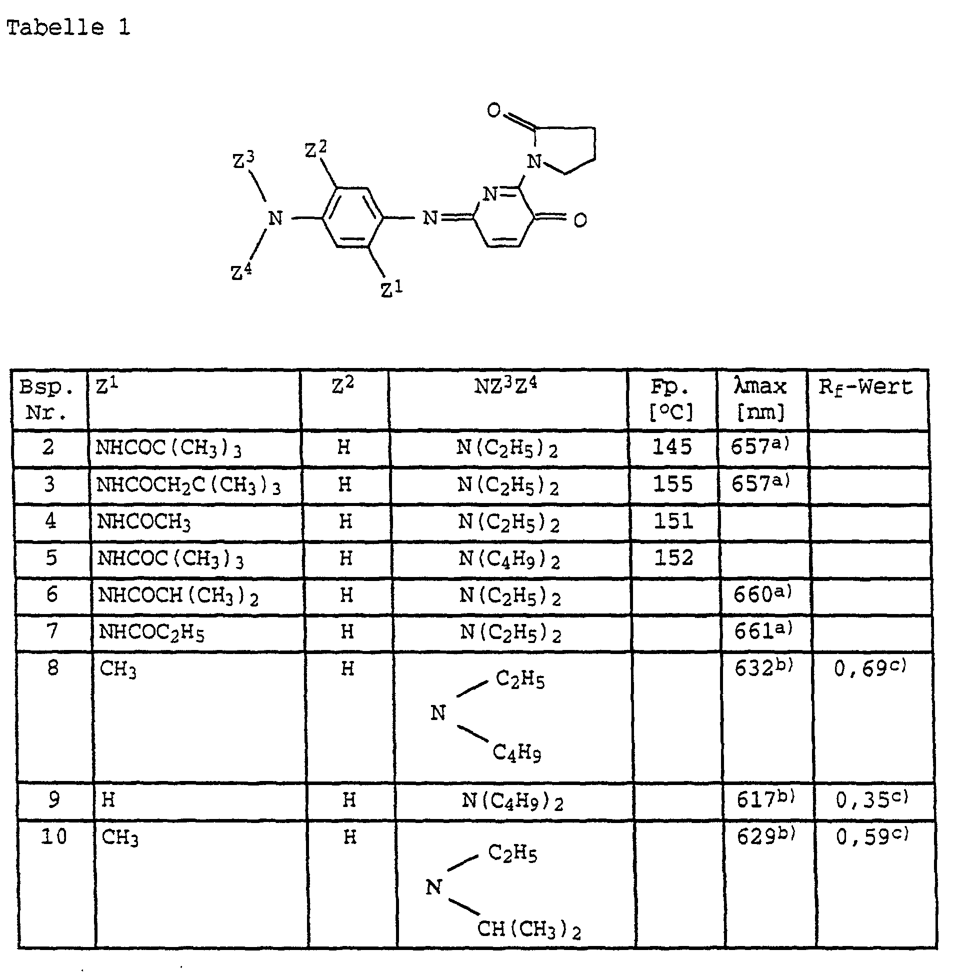

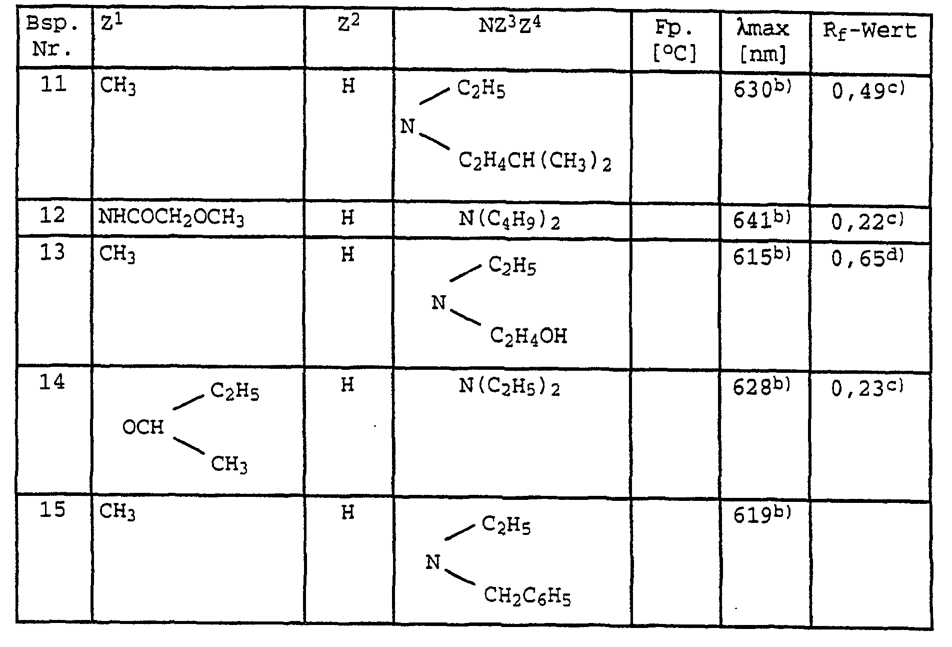

### B) Anwendung im Thermotransfer

### Allgemeine Vorschrift:

a) 10 g Farbstoff werden, gegebenenfalls unter kurzzeitigem Erwärmen auf 80 bis 90°C, in 100 g einer 10 gew.-%igen Lösung eines Bindemittels in einem Methylethylketon/Toluol/Cyclohexanon-Gemisch (4,5:2:2 v/v/v) eingerührt.
   Das Gemisch wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsübliches Videoprintpapier verdruckt.
   Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,5 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind in der folgenden Tabelle 2 aufgeführt. Es wurde ein Bindemittel auf Basis von Polyvinylbutyral und als Aufnahmemedium Color-Videoprintpapier der Fa. Hitachi benutzt.

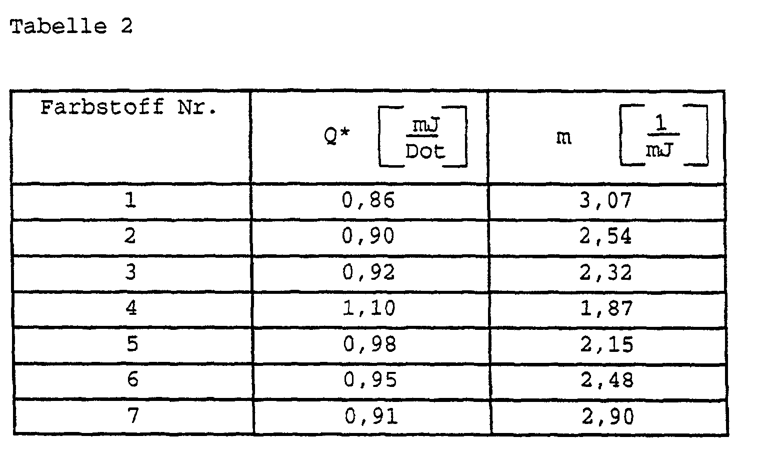

## Patentansprüche

1. Methinfarbstoffe der Formel I 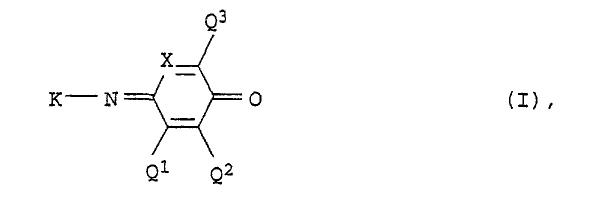 in der K einen Rest der Formel 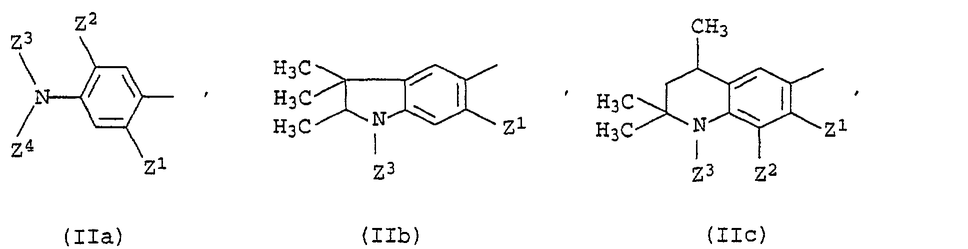 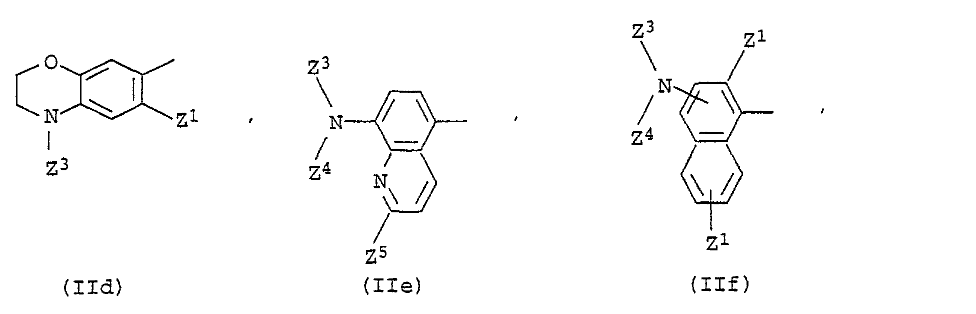 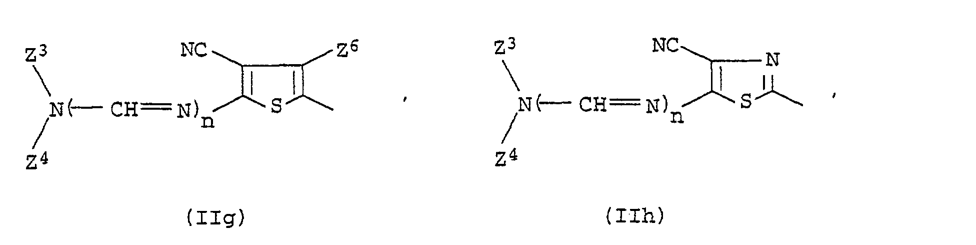 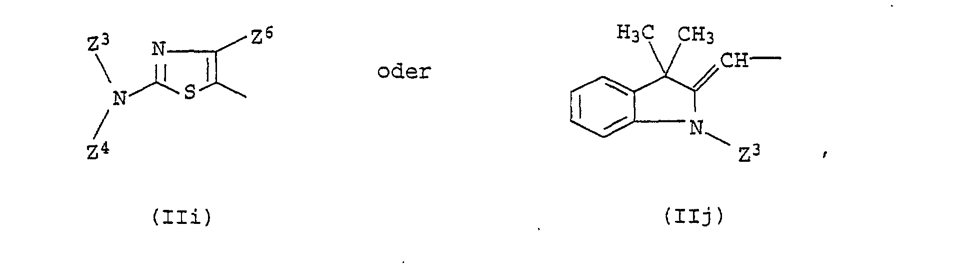 worin
n für 0 oder 1,
Z¹ für Wasserstoff, C₁-C₆-Alkyl, das gegebenenfalls durch 1 oder 2 Sauerstoffatome in Etherfunktion unterbrochen ist, Hydroxy, C₁-C₆-Alkoxy, C₁-C₆-Alkylsulfonylamino, C₁-C₆-Mono- oder Dialkylaminosulfonylamino oder den Rest -NHCOZ⁷ oder -NHCO₂Z⁷, wobei Z⁷ die Bedeutung von Phenyl, Benzyl, Tolyl, Thienyl oder C₁-C₆-Alkyl, das gegebenenfalls durch ein Sauerstoffatom in Etherfunktion unterbrochen ist, besitzt,
Z² für Wasserstoff, Halogen, C₁-C₆-Alkyl oder C₁-C₆-Alkoxy,
Z³ und Z⁴ unabhängig voneinander jeweils für Wasserstoff, C₁-C₁₃-Alkyl, das gegebenenfalls substituiert ist und durch 1 bis 3 Sauerstoffatome in Etherfunktion unterbrochen sein kann, C₃-C₄-Alkenyl, C₃-C₈-Cycloalkyl, Phenyl oder Tolyl oder zusammen mit dem sie verbindenden Stickstoffatom für einen 5- oder 6-gliedrigen gesättigten heterocyclischen Rest, der gegebenenfalls weitere Heteroatome enthält,
Z⁵ für Wasserstoff oder C₁-C₆-Alkyl und
Z⁶ für Wasserstoff, Halogen, C₁-C₆-Alkyl, gegebenenfalls substituiertes Phenyl, gegebenenfalls substituiertes Benzyl, C₃-C₈-Cycloalkyl, Thienyl, Hydroxy, C₁-C₆-Alkoxy, C₁-C₆-Alkylthio oder C₁-C₆-Monoalkylamino stehen,
X Stickstoff oder einen Rest der Formel C―Q¹ und
Q¹, Q² und Q³ unabhängig voneinander jeweils Wasserstoff, C₁-C₆-Alkyl, das gegebenenfalls durch 1 oder 2 Sauerstoffatome in Etherfunktion unterbrochen ist, Benzyl, C₃-C₈-Cycloalkyl, gegebenenfalls substituiertes Phenyl, C₁-C₄-Fluoralkyl, C₁-C₆-Alkoxy, Benzyloxy, gegebenenfalls substituiertes Phenoxy, C₁-C₆-Alkylthio, Halogen, Cyano, Formylamino oder einen Rest der Formel R³, -CO-OR¹, -CO-NHR¹, -CO-NH-CO-R¹, -CO-NH-CO-R⁴, -CO-NH-SO₂R⁴, -NH-CO-R¹, -NH-CO-OR¹, -NH-CO-NR¹R², -NH-CS-OR¹, -NH-CS-NR¹R², -NH-CO-R⁴, -NH-SO₂-R¹, -NH-SO₂-R⁴ oder -NH-SO₂-NR¹R², worin R¹ und R² unabhängig voneinander jeweils für C₁-C₁₃-Alkyl, das gegebenenfalls substituiert ist und durch 1 bis 3 Sauerstoffatome in Etherfunktion unterbrochen sein kann, C₃-C₈-Cycloalkyl, gegebenenfalls substituiertes Phenyl oder -NR¹R² auch für Amino, R³ für einen Rest der Formel 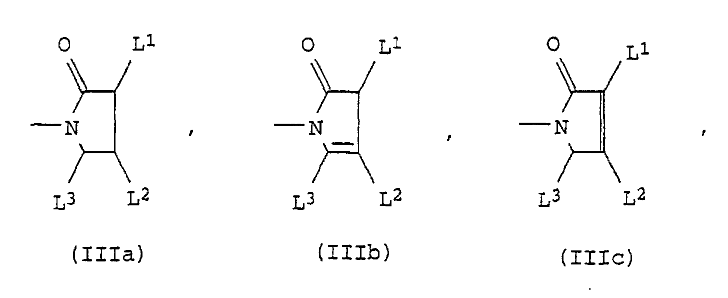 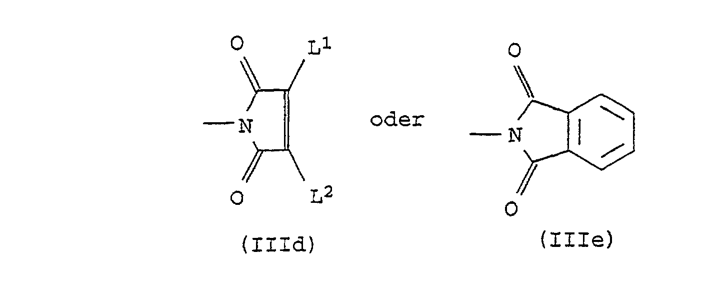
worin L¹, L² und L³ unabhängig voneinander jeweils die Bedeutung von Wasserstoff oder C₁-C₄-Alkyl besitzen und R⁴ für einen 5- oder 6-gliedrigen heterocyclischen Rest, der gegebenenfalls benzoanelliert ist und ein oder mehrere Heteroatome, ausgewählt aus der Gruppe, bestehend aus Stickstoff, Sauerstoff und Schwefel, aufweist, stehen, oder Q¹ und Q² zusammen mit den Kohlenstoffatomen, an die sie geknüpft sind, einen 5- oder 6-gliedrigen carbocyclischen oder heterocyclischen Ring bedeuten,
mit der Maßgabe, daß mindestens einer der Reste Q¹, Q² oder Q³ die Bedeutung des Restes R³ besitzt.

2. Methinfarbstoffe nach Anspruch 1, **dadurch gekennzeichnet, daß** Q¹, Q² und Q³ unabhängig voneinander jeweils Wasserstoff, Halogen, C₁-C₄-Alkyl, C₁-C₄-Alkoxy, Formylamino oder einen Rest der Formel R³, -NH-CO-R¹ oder -NH-CO-OR¹ bedeuten, worin R¹ und R³ jeweils die in Anspruch 1 genannte Bedeutung besitzen.

3. Methinfarbstoffe nach den Ansprüchen 1 bis 2, **dadurch gekennzeichnet, daß** K einen Rest der Formel IIa, IIc oder IIi bedeutet.

4. Methinfarbstoffe nach den Ansprüchen 1 bis 3, **dadurch gekennzeichnet, daß** Q¹ Wasserstoff, C₁-C₄-Alkyl, Halogen oder einen Rest der Formel -NH-CO-R¹, worin R¹ für C₁-C₆-Alkyl, das gegebenenfalls durch Phenyl, Halogen oder Hydroxy substituiert ist, oder Cyclohexyl steht, und Q² und Q³ unabhängig voneinander jeweils Wasserstoff C₁-C₄-Alkyl, Formylamino oder einen Rest der Formel R³ oder -NH-CO-R¹, worin R¹ für C₁-C₆-Alkyl oder Tolyl steht und R³ die in Anspruch 1 genannte Bedeutung besitzt, bedeuten.

5. Methinfarbstoffe nach den Ansprüchen 1 bis 4, die der Formel Ia 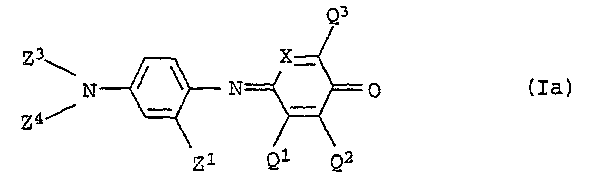 gehorchen, in der
X Stickstoff oder einen Rest der Formel C―Q¹,
Z¹ Wasserstoff, C₁-C₄-Alkyl oder C₂-C₅-Alkanoylamino,
Z³ und Z⁴ unabhängig voneinander jeweils C₁-C₆-Alkyl, das gegebenenfalls durch Hydroxy substituiert ist, Benzyl, Cyclohexyl, Phenyl oder Tolyl,
Q¹ Wasserstoff, C₁-C₄-Alkyl, C₁-C₄-Alkoxy oder einen Rest der Formel -NH-CO-R¹ und
Q² und Q³ unabhängig voneinander jeweils Wasserstoff, C₁-C₄-Alkyl, C₁-C₄-Alkoxy, Formylamino oder einen Rest der Formel R^{3,} -NH-CO-R¹ oder -NH-CO-OR¹ bedeuten, wobei R¹ jeweils für C₁-C₆-Alkyl, das gegebenenfalls durch Hydroxy substituiert ist, Benzyl, Cyclohexyl, Phenyl oder Tolyl steht und R³ die in Anspruch 1 genannte Bedeutung besitzt,
mit der Maßgabe, daß mindestens einer der Reste Q² oder Q³ die Bedeutung des Restes R³ besitzt.

6. Methinfarbstoffe nach den Ansprüchen 1 bis 5 **dadurch gekennzeichnet, daß** Q³ einen 5- oder 6-gliedrigen nicht-aromatischen heterocyclischen Rest, der gegebenenfalls benzoanalliert ist und ein oder mehrere Heteroatome, ausgewählt aus der Gruppe, bestehend aus Stickstoff, Sauerstoff und Schwefel, aufweist, bedeutet.

7. Verfahren zur Übertragung von Farbstoffen von einem Träger auf ein mit Kunststoff beschichtetes Papier durch Diffusion oder Sublimation mit Hilfe einer Energiequelle, **dadurch gekennzeichnet, daß** man einen Träger verwendet, auf dem sich ein oder mehrere Methinfarbstoffe gemäß Anspruch 1 befinden.

## Claims

1. Methine dyes of the formula I 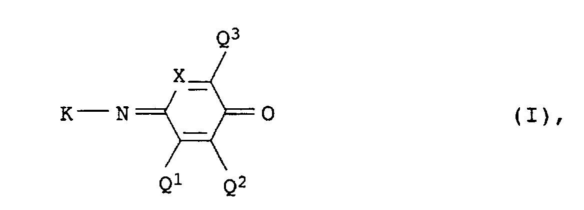 where K is a radical of the formula 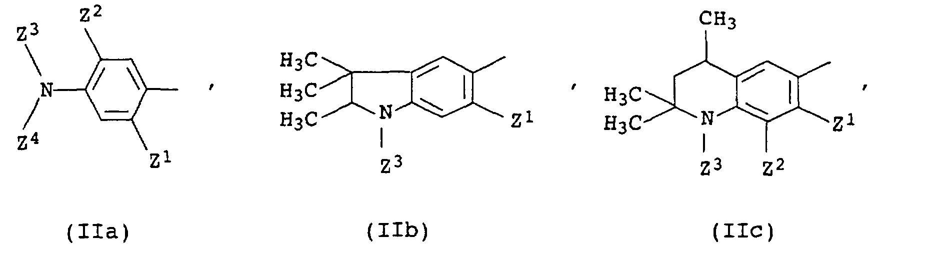 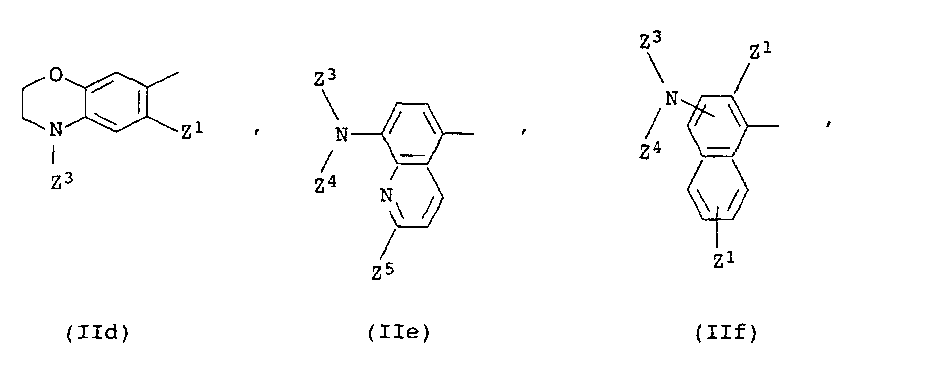 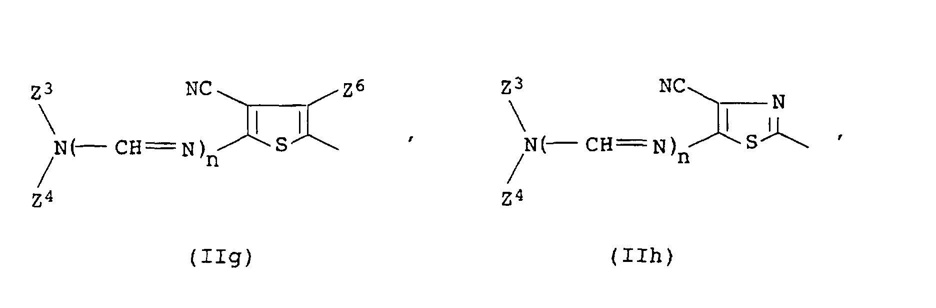 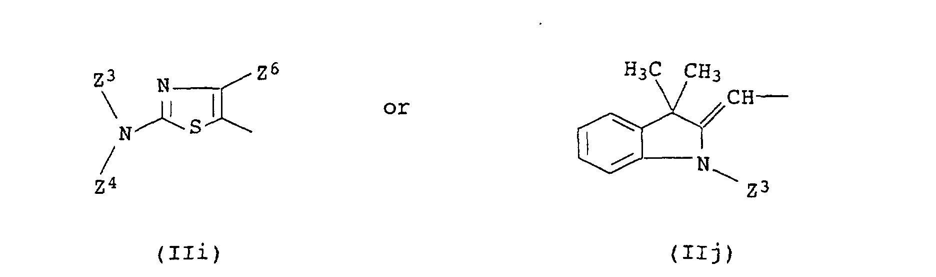 where
n is 0 or 1,
Z¹ is hydrogen, C₁-C₆-alkyl with or without interruption by 1 or 2 oxygen atoms in ether function, hydroxyl, C₁-C₆-alkoxy, C₁-C₆-alkylsulfonylamino, mono- or di(C₁-C₆-alkyl)aminosulfonylamino or the radical -NHCOZ⁷ or -NHCO₂Z⁷, where Z⁷ is phenyl, benzyl, tolyl, thienyl or C₁-C₆-alkyl with or without interruption by an oxygen atom in ether function,
Z² is hydrogen, halogen, C₁-C₆-alkyl or C₁-C₆-alkoxy,
Z³ and Z⁴ are each independently of the other hydrogen, C₁-C₁₃-alkyl with or without substitution and with or without interruption by from 1 to 3 oxygen atoms in ether function, C₃-C₄-alkenyl, C₃-C₈-cycloalkyl, phenyl or tolyl or are together with the nitrogen atom joining them together a 5- or 6-membered saturated heterocyclic radical with or without further hetero atoms,
Z⁵ is hydrogen or C₁-C₆-alkyl, and
Z⁶ is hydrogen, halogen, C₁-C₆-alkyl, substituted or unsubstituted phenyl, substituted or unsubstituted benzyl, C₃-C₈-cycloalkyl, thienyl, hydroxyl, C₁-C₆-alkoxy, C₁-C₆-alkylthio or C₁-C₆-monoalkylamino,
X is nitrogen or a radical of formula C-Q¹, and
Q¹, Q² and Q³ are each independently of the others hydrogen, C₁-C₆-alkyl with or without interruption by 1 or 2 oxygen atoms in ether function, benzyl, C₃-C₈-cycloalkyl, substituted or unsubstituted phenyl, C₁-C₄-fluoroalkyl, C₁-C₆-alkoxy, benzyloxy, substituted or unsubstituted phenoxy, C₁-C₆-alkylthio, halogen, cyano, formylamino or a radical of the formula R³, -CO-OR¹, -CO-NHR¹, -CO-NH-CO-R¹, -CO-NH-CO-R⁴, -CO-NH-SO₂R⁴, -NH-CO-R¹, -NH-CO-OR¹, -NH-CO-NR¹R², NH-CS-OR¹, -NH-CS-NR¹R², -NH-CO-R⁴, -NH-SO₂-R¹, -NH-SO₂-R⁴ or -NH-SO₂-NR¹R², where R¹ and R² are each independently of the other C₁-C₁₃-alkyl with or without substitution and with or without interruption by from 1 to 3 oxygen atoms in ether function, C₃-C₈-cycloalkyl or substituted or unsubstituted phenyl, or else -NR¹R² is amino, R³ is a radical of the formula 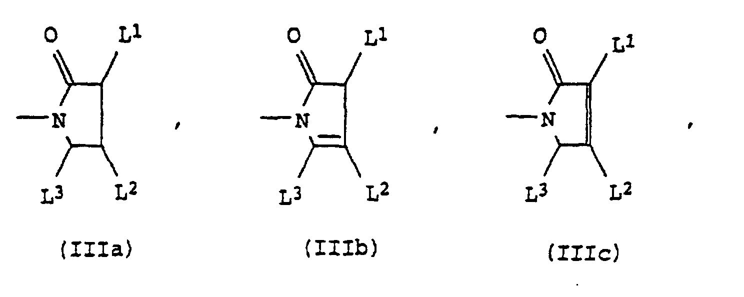 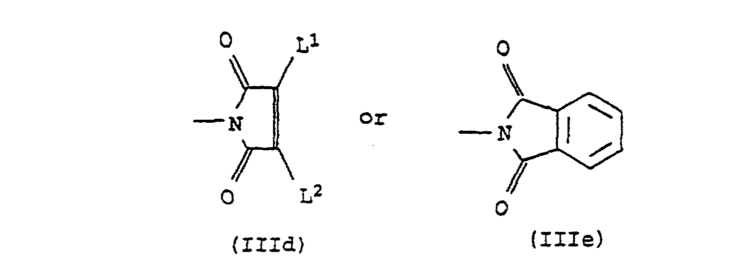
where L¹, L² and L³ are each independently of the other hydrogen and C₁-C₄-alkyl, and R⁴ is a 5- or 6-membered heterocyclic radical which may be benzofused and has one or more hetero atoms selected from the group consisting of nitrogen, oxygen and sulfur, or Q¹ and Q² are together with the carbon atoms to which they are attached a 5- or 6-membered carbocyclic or heterocyclic ring,
with the proviso that at least one of Q¹, Q² and Q³ is R³.

2. Methine dyes as claimed in claim 1 wherein Q¹, Q² and Q³ are each independently of the others hydrogen, halogen, C₁-C₄-alkyl, C₁-C₄-alkoxy, formylamino or a radical of the formula R³, -NH-CO-R¹ or -NH-CO-OR¹, where R¹ and R³ are each as defined in claim 1.

3. Methine dyes as claimed in claim 1 or 2 wherein K is a radical of the formula IIa, IIc or IIi.

4. Methine dyes according to any of claims 1 to 3 wherein Q¹ is hydrogen, C₁-C₄-alkyl, halogen or a radical of formula -NH-CO-R¹ where R¹ is C₁-C₆-alkyl with or without phenyl, halogen or hydroxyl substitution or cyclohexyl and Q² and Q³ are independently of each other hydrogen, C₁-C₄-alkyl, formylamino or a radical of the formula R³ or -NH-CO-R¹ where R¹ is C₁-C₆-alkyl or tolyl and R³ is as defined in claim 1.

5. Methine dyes as claimed in any of claims 1 to 4 of the formula Ia 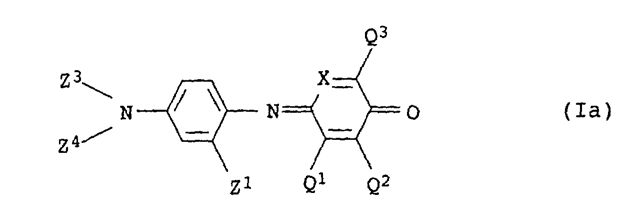 where
X is nitrogen or a radical of formula C-Q¹,
Z¹ is hydrogen, C₁-C₄-alkyl or C₂-C₅-alkanoylamino,
Z³ and Z⁴ are independently of each other C₁-C₆-alkyl with or without hydroxyl substitution, benzyl, cyclohexyl, phenyl or tolyl,
Q¹ is hydrogen, C₁-C₄-alkyl, C₁-C₄-alkoxy or a radical of the formula -NH-CO-R¹, and
Q² and Q³ are independently of each other hydrogen, C₁-C₄-alkyl, C₁-C₄-alkoxy, formylamino or a radical of the formula R³, -NH-CO-R¹ or -NH-CO-OR¹ where R¹ is in each case C₁-C₆-alkyl with or without hydroxyl substitution, benzyl, cyclohexyl, phenyl or tolyl and R³ is as defined in claim 1,
with the proviso that at least one of Q² and Q³ is R³.

6. Methine dyes as claimed in any of claims 1 to 5 wherein Q³ is a 5- or 6-membered nonaromatic heterocyclic radical which may be benzofused and has one or more hetero atoms selected from the group consisting of nitrogen, oxygen and sulfur.

7. A process for transferring dyes from a transfer to a plastic-coated paper by diffusion or sublimation with the aid of an energy source, which comprises using a transfer on which there is or are one or more methine dyes as claimed in claim 1.

## Revendications

1. Colorants méthine de formule I 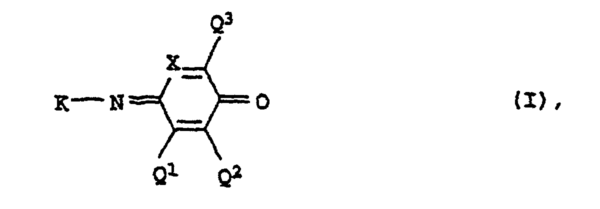 dans laquelle K représente un résidu de formules: 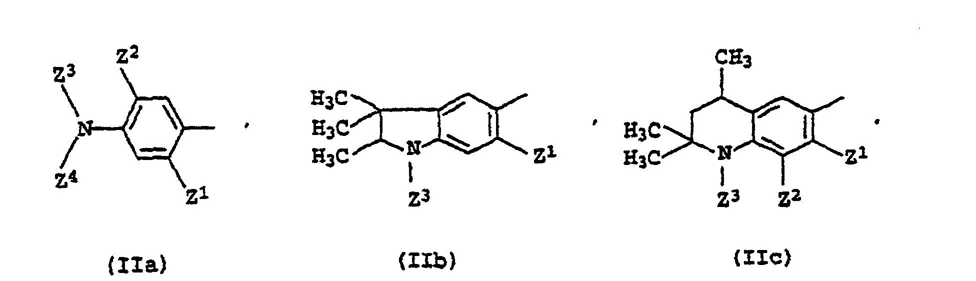 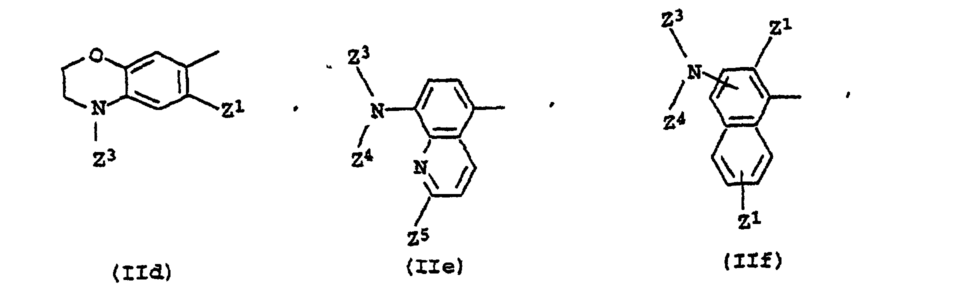 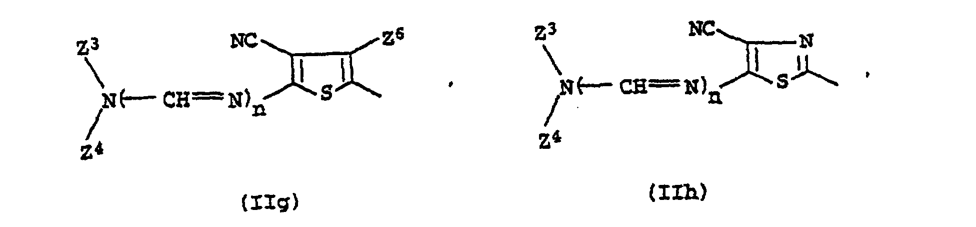 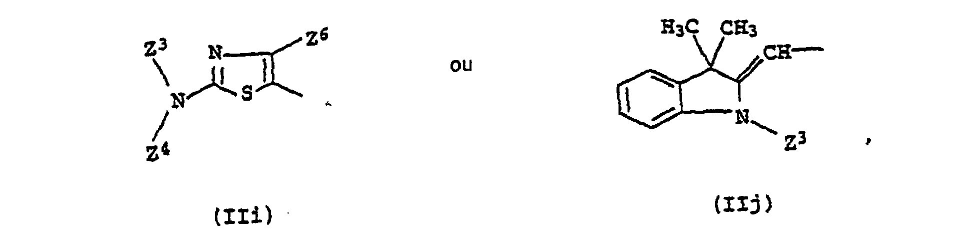 dans lesquelles
n vaut 0 ou 1,
Z¹ représente un atome d'hydrogène, un groupe alkyle en C₁ à C₆, qui peut être éventuellement interrompu par 1 ou 2 atomes d'oxygène dans la fonction éther, un groupe hydroxy, alcoxy en C₁ à C₆, alkylsulfonylamino en C₁ à C₆, mono ou di-alkylaminosulfonylamino en C₁ à C₆, ou le résidu -NHCOZ⁷ ou -NHCO₂Z⁷, dans lequel Z⁷ prend la signification d'un groupe phényle, benzyle, tolyle, thiényle ou alkyle en C₁ à C₆, qui est éventuellement interrompu par un atome d'oxygène dans la fonction éther,
Z² représente une atome d'hydrogène, un atome d'halogéne, un groupe alkyle en C₁ à C₆, ou alcoxy en C₁ à C₆,
Z³ et Z⁴ représentent chacun indépendamment l'un de l'autre, une atome d'hydrogène, un groupe alkyle en C₁ à C₁₃, qui est éventuellement substitué et qui peut être interrompu par 1 à 3 atomes d'oxygène dans la fonction éther, un groupe alcényle en C₃ à C₄, cycloalkyle en C₃ à C₈, phényle ou tolyle, ou conjointement avec l'atome d'azote qui les lie, représente un résidu hétérocyclique saturé à 5 ou 6 maillons qui contient éventuellement d'autres hétéroatomes,
Z⁵ représente un atome d'hydrogène ou un groupe alkyle en C₁ à C₆, et
Z⁶ représente un atome d'hydrogène, un atome d'halogène, un groupe alkyle en C₁ à C₆, phényle éventuellement substitué, benzyle éventuellement substitué, cycloalkyle en C₃ à C₈, thiényle, hydroxy, alcoxy en C₁ à C₆, alkylthio en C₁ à C₆, ou monoalkylamino en C₁ à C₆,
X représente un atome d'azote ou un résidu de formule C―Q¹ et
Q¹, Q² et Q³ représentent chacun indépendamment l'un de l'autre, un atome d'hydrogène, un groupe alkyle en C₁ à C₆, qui est éventuellement interrompu par 1 ou 2 atomes d'oxygène dans la fonction éther, benzyle, cycloalkyle en C₃ à C₈, phényle éventuellement substitué, fluoroalkyle en C₁ à C₄, alcoxy en C₁ à C₆, benzyloxy, phénoxy éventuellement substitué, alkylthio en C₁ à C₆, halogéno, cyano, formylamino ou un résidu de formule R³, -CO-OR¹, -CO-NHR¹, -CO-NH-CO-R¹, -CO-NH-CO-R⁴, -CO-NH-SO₂R⁴, -NH-CO-R¹, -NH-CO-OR¹, -NH-CO-NR¹R², -NH-CS-OR¹, -NH-CS-NR¹R², -NH-CO-R⁴, -NH-SO₂-R¹, -NH-SO₂-R⁴, ou -NH-SO₂-NR¹R², dans lesquelles R¹ et R² représentent chacun indépendamment l'un de l'autre, un groupe alkyle en C₁ à C₁₃, qui est éventuellement substitué et qui peut être interrompu par 1 à 3 atomes d'oxygène dans la fonction éther, cycloalkyle en C₃ à C₈, phényle éventuellement substitué ou -NR¹R², également un groupe amino, R³ représente un résidu de formule 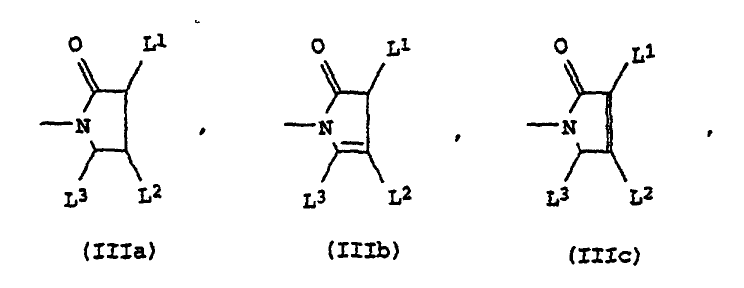 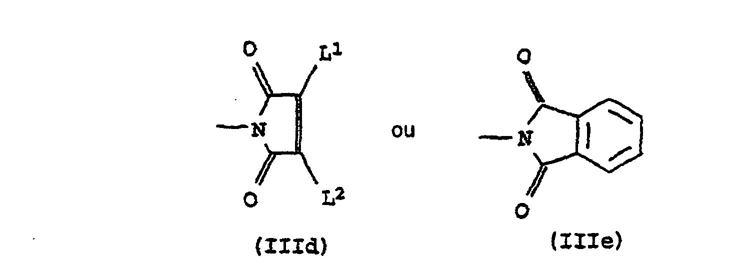
dans laquelle L¹, L², et L³ prennent chacun indépendamment l'un de l'autre, la signification d'un atome d'hydrogène ou d'un groupe alkyle en C₁ à C₄, et R⁴ représente un résidu hétérocyclique à 5 ou 6 maillons, qui est éventuellement benzocondensé et qui comprend un ou plusieurs hétéroatomes choisis dans le groupe formé par l'atome d'azote, l'atome d'oxygène et l'atome de soufre, ou bien Q¹ à Q² conjointement avec les atomes de carbone auxquels ils sont liés, représentent un cycle carbocyclique ou hétérocyclique à 5 ou 6 maillons, à la condition qu'au moins un des résidus Q¹, Q² ou Q³ prenne la signification du résidu R³.

2. Colorants méthine selon la revendication 1,
**caractérisés en ce que** Q¹, Q² et Q³ représentent chacun indépendamment l'un de l'autre, un atome d'hydrogène, d'halogène, un groupe alkyle en C₁ à C₄, alcoxy en C₁ à C₄, formylamino ou un résidu de formule R³, -NH-CO-R¹, ou -NH-CO-OR¹, dans lesquelles R¹ et R³ prennent chacun la signification citée dans la revendication 1.

3. Colorants méthine selon les revendications 1 à 2, **caractérisés en ce que** K représente un résidu de formule IIa, IIc ou IIi.

4. Colorants méthine selon les revendications 1 à 3, **caractérisés en ce que** Q¹ représente un atome d'hydrogène, un groupe alkyle en C₁ à C₄, halogéno ou un résidu de formule-NH-CO-R¹, dans laquelle R¹ représente un groupe alkyle en C₁ à C₆, qui est éventuellement substitué par un groupe phényle, halogéno ou hydroxy, ou un groupe cyclohexyle et Q² et Q³ représentent chacun indépendamment l'un de l'autre, un atome d'hydrogène, un groupe alkyle en C₁ à C₄, formylamino ou un résidu de formule R³, ou -NH-CO-R¹, dans laquelle R¹ représente un groupe alkyle en C₁ à C₆, ou tolyle et R³ prend la signification citée dans la revendication 1.

5. Colorants méthine selon les revendications 1 à 4, qui obéissent à la formule Ia 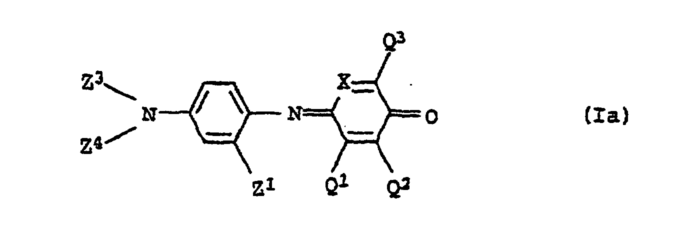 dans laquelle
X représente un atome d'azote ou un résidu de formule C―Q¹,
Z¹ représente un atome d'hydrogène, un groupe alkyle en C₁ à C₄, ou alcanoylamino en C₂ à C₅,
Z³ et Z⁴ représentent chacun indépendamment l'un de l'autre, un groupe alkyle en C₁ à C₆, qui est éventuellement substitué par un groupe hydroxy, un groupe benzyle, cyclohexyle, phényle ou tolyle,
Q¹ représente un atome d'hydrogène, un groupe alkyle en C₁ à C₄, alcoxy en C₁ à C₄, ou un résidu de formule -NH-CO-R¹, et
Q² et Q³ représentent chacun indépendamment l'un de l'autre un atome d'hydrogène, un groupe alkyle en C₁ à C₄, alcoxy en C₁ à C₄, formylamino ou un résidu de formule R³, -NH-CO-R¹, ou -NH-CO-OR¹, dans lesquelles R¹ représente respectivement un groupe alkyle en C₁ à C₆, qui est substitué éventuellement par un groupe hydroxy, un groupe benzyle, cyclohexyle, phényle ou tolyle et R³ prend la signification citée dans la revendication 1,
à condition qu'au moins un des résidus Q² ou Q³ prenne la signification du résidu R³.

6. Colorants méthine selon les revendications 1 à 5 **caractérisés en ce que** Q³ représente un résidu hétérocyclique non aromatique à 5 ou 6 maillons qui est éventuellement benzocondensé et comprend un ou plusieurs hétéroatomes choisis dans le groupe formé par l'azote, l'oxygène et le soufre.

7. Procédé de transfert de colorants à partir d'un support sur un papier revêtu de matière plastique par diffusion ou sublimation à l'aide d'une source d'énergie, **caractérisé en ce que** l'on utilise un support sur lequel se trouvent un ou plusieurs colorants méthine selon la revendication 1.
